# EUROPEAN PATENT APPLICATION

(11) **EP 4 571 933 A1**
(43) Date of publication of application: **18.06.2025**
(21) Application number: 23215878.2
(22) Date of filing: 12.12.2023
(51) Int. Cl.: H01M 10/48, H01M 10/613, H01M 10/6567, H01M 10/6568, H01M 50/204, H01M 50/342, H01M 50/383

(54) **BATTERY CELL SYSTEM, BATTERY CELL, COOLING MEANS, AND METHOD FOR OPERATING A BATTERY CELL SYSTEM**

(71) Applicant: CUSTOMCELLS Holding GmbH, 25524 Itzehoe (DE)
(72) Inventor: De Righetti, Philip, Itzehoe (DE)
(74) Representative: LKGLOBAL Lorenz & Kopf Patentanwalt Attorney at Law PartG mbB

(57) **Abstract**

A first aspect of the present disclosure is related to a battery cell system, comprising:
- one or more battery cells each comprising a housing, wherein the housing comprises a bursting membrane ;
- a cooling means formed along the one or more battery cells and comprising a cooling fluid ;
wherein, if the bursting membrane of a battery cell bursts, it is configured to open the cooling means such that the cooling fluid enters the battery cell.

## Description

### Technical Field

This disclosure is related to battery cells systems with battery cells and a cooling means. Battery cells and cooling means therefore are disclosed. Furthermore, methods for operating a battery cell system are disclosed.

### Background

Cooling is important in battery cell systems to manage heat generated during charging and discharging, ensuring safety, performance consistency, and longevity. Electrical batteries produce heat due to internal resistance and electrochemical reactions. Without effective cooling, this heat can lead to reduced efficiency, decreased power output, and shorter battery life. More critically, excessive heat may cause thermal runaway, posing risks of damage, fires, or explosions. Cooling systems maintain batteries within their optimal temperature range, enhancing performance, especially in applications like electric vehicles and large-scale energy storage. Additionally, cooling helps in uniformly distributing temperature across the battery pack, preventing hot spots and uneven wear among cells. However, even in battery cell systems with a cooling means, single battery cells might still overheat and/or experience a thermal runaway. Improvements for this scenario are desirable.

### Summary

An object of the present disclosure is to improve a safety of a battery cell system.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell system, comprising:
- one or more battery cells each comprising a housing, wherein the housing comprises a bursting membrane ;
- a cooling means formed along the one or more battery cells and comprising a cooling fluid ;
wherein, if the bursting membrane of a battery cell bursts, it is configured to open the cooling means such that the cooling fluid enters the battery cell.

A battery cell can be any type of electrical battery cell that is equipped with a cooling/heating channel. A battery cell can be round (cylindrical, oval, etc.). A battery cell can also be a prismatic battery cell. A battery cell can even be a cell with a housing comprising a pouch foil.

A housing can be a rigid can. A can is the outer shell or casing of the battery. It can act as a container for the internal components, such as the cathode, anode, separator, and electrolyte, and can provide structural integrity to the battery. The can can also serve as one of the electrical contacts, usually the negative terminal. The can can be formed round, prismatic, or custom-made. Cylindrical cells, like the widely-used 18650 or 21700 cells, can have a cylindrical can. The can generally be made of metal, such as steel or aluminum, to provide a robust and durable enclosure and to efficiently conduct electricity. A housing can comprise a can and one or two lids to close the can if it has an open side.

A bursting membrane can be a safety device designed to rupture or burst under pre-defined conditions of the battery cell. A bursting membrane can be configured to burst if a pre-defined pressure is reached. Additionally or alternatively, a bursting membrane can be configured to burst if a pre-defined temperature is reached. A bursting membrane can be configured as a rupture disc. This can be a thin membrane at the top or the bottom of the battery cell. It can be made of metal or other materials engineered to burst at a precise pressure. A bursting membrane can comprise stainless steel, nickel, tantalum, polymers, or composite materials. A bursting/rupture of the bursting membrane will cause the fluids enter the battery cell housing. The bursting membrane can be arranged in the base of the housing, attached to the housing, and/or integrated into a lid.

A cooling fluid can be a fluid, a gas, or a foam. It can be led along at least one part of the battery cell. In normal operation, the cooling fluid cools the battery cells. The cooling fluid can also be configured to heat the battery. This can in particular be useful at the beginning of an operation when the batteries need to heated to an optimal temperature for operation. The cooling fluid can be led along the battery in a cooling means, which can be a flexible and/or a stiff channel for the cooling fluid. Additionally or alternatively, the channel can be a cooling plate which is, in particular designed as a strand profile, and has a coolant (or heating fluid) flowing through it.

If a battery cell in the battery cell system fails, the bursting membrane ruptures and causes the coolant to release the coolant into the battery housing. This leads to a fire being interrupted and/or a fire not starting in the first place.

An embodiment of the first aspect of the present disclosure is related to a battery cell,
wherein the bursting membrane of a battery cell is configured to penetrate the cooling means , if the bursting membrane bursts.

The bursting membrane can, if it ruptures, open the cooling means directly. If a bursting membrane of a battery cell bursts, the cooling means, e.g. the strand profile or a rubber tube, is perforated by the escaping pressure and cooling fluid is shot into the cell. In this case, a fire can be quickly extinguished or prevented.

An embodiment of the first aspect of the present disclosure is related to a battery cell,
wherein the cooling means comprises breaking points arranged at the positions of the battery cells .

Breaking points can facilitate an opening of the cooling means in case a bursting membrane ruptures. The breaking points can be arranged such that the bursting membrane directly impacts the cooling means at the location of a breaking point.

An embodiment of the first aspect of the present disclosure is related to a battery cell,
wherein the cooling means is connected to each battery cell by a valve such that in a non-closed state of the valve, the cooling means provides cooling fluid to the respective battery; and
wherein each of the bursting membranes of the battery cells is configured to open the valve, if the bursting membrane bursts.

The bursting membrane can, if it ruptures, open the cooling means indirectly. In this case a ruptured membrane will cause a valve to open and release the cooling fluid into the battery in a more controlled way, as if the bursting membrane penetrates the cooling means directly.

An embodiment of the first aspect of the present disclosure is related to a battery cell,
comprising a pump configured to pump fluid into a battery cell if its bursting membrane breaks.

In case a bursting membrane ruptures, the fluid can be pumped with extra pressure into the battery. This can be performed by a pump that can in particular only be activated when a bursting membrane broke or is about to break. This can be registered by a sensor, which can be, e.g., a temperature sensor, a pressure sensor, or a sensor that senses if the bursting membrane has burst or not. Additionally or alternatively, the a pump can be used to pressurize the cooling fluid independently of the state of a bursting membrane.

An embodiment of the first aspect of the present disclosure is related to a battery cell,
wherein the cooling fluid comprises a flame retardant.

In case the cooling or heating fluid will function as flame extinguishing fluid, it should not be flammable. Furthermore, it would be good if the fluid functions as a fluid suppressor. A flame suppressor can be used as fluid or it can be mixed to the cooling fluid.

A flame suppressor can be a substance used to extinguish or control fires. A flame suppressor can e.g. comprise water, aqueous film forming foam (AFFF) , halogenated agents, carbon dioxide, wet chemicals. In particular the cooling fluid can be configured, based on AFFF or similar fluids, to transform to foam if it is released from the pressurized cooling means (channel) into a battery cell housing.

An embodiment of the first aspect of the present disclosure is related to a battery cell,
wherein the fluid is dielectric.

A dielectric fluid is a type of insulating fluid to provide electrical insulation. A dielectric fluid can be distilled water or comprise distilled water. Additionally or alternatively, a dielectric fluid can comprise oils, synthetic or natural esters, fluorinated hydrocarbons, perfluorocarbons, sulfur hexafluoride, or polyalphaolefins.

An embodiment of the first aspect of the present disclosure is related to a battery cell,
comprising a fluid reservoir connected to the cooling means .

In case a bursting membrane ruptures cooling/heating fluid is released into the battery cell. In this case, there might not be enough fluid for cooling the rest of the battery cell system, i.e. for cooling the other batteries. This might lead to a dangerous situation because also the other battery cells might fail. In this case, additional fluid from the fluid reservoir is provided for cooling.

An embodiment of the first aspect of the present disclosure is related to a battery cell,
comprising a fluid color configured to color the cooling fluid in case a bursting membrane ruptures.

A fluid color can be comprised by the battery cell, i.e. by the bursting membrane. Additionally or alternatively, a fluid color can be comprised by the cooling means, in particular such that the fluid color is released into the cooling fluid if the bursting membrane causes to open the cooling means. Therefore, e.g. the fluid color can be arranged in a special cavity at the breaking points of the cooling means. The fluid color can be a fluorescent dye, such as rhodamine B, fluorescein, or a phycobiliproteins.

An embodiment of the first aspect of the present disclosure is related to a battery cell,
comprising a sensor configured to detect if a bursting membrane broke and providing the information for an external receiver.

A sensor can be used to detect the state of the burst membrane. For example, a sensor can be used to control the fluid pressure in the cooling means. In case all batteries work properly - and no burst membrane ruptured - a first pressure can be adjusted. In case a sensor detects rupture of a burst membrane and therefore failing of a battery cell, a second pressure can be commanded, which is higher than the first pressure. In this case fluid can be pushed into the failed battery cell and on the same time the rest of the battery cell system can still be cooled as the remaining fluid can still be kept at the same (or a similar) pressure. In this case, it could also be beneficial to open a fluid reservoir such that there is enough fluid provided for cooling the remaining batteries. The latter can be initiated by the same sensor. Additionally or alternatively, it can be initiated by a different sensor.

Every battery cell can feature one or more sensors to observe important states of the battery cell to detect a failed battery cell and/or to predict a failing of a battery cell. Therefore, each battery cell can feature a temperature sensor, a pressure sensor, and/or a sensor for the state of the bursting membrane.

A second aspect of the present disclosure is related to a battery cell for arrangement in a battery cell system,
comprising:
- a housing and an electrode stack;
- a bursting membrane ; and
configured to be mounted on a cooling means such that the bursting membrane, when it ruptures, causes a cooling fluid from the cooling means to be provided into the battery housing.

The battery cell system can in particular be a battery cell system according to the first aspect of this disclosure.

A third aspect of the present disclosure is related to a cooling means for arrangement in a battery cell system,
comprising:
- a channel for a cooling fluid ; and
   configured to - be mounted to a battery cell ; and
- provide the cooling fluid into a battery housing of the battery cell in case the battery cell causes to open the cooling means.

The battery cell system can in particular be a battery cell system according to the first aspect of this disclosure.

An embodiment of the third aspect of the present disclosure is related to a cooling means,
comprising a plurality of replaceable modules .

One or more cooling means modules can either be stiff profiles that can be attached to each other, e.g. via a click mechanism. Additionally or alternatively, one or more modules can be flexible modules, e.g. made of rubber or plastics. At least two types of cooling means modules can be connected to each other. A first type of module is configured to be arranged under a battery cell and therefore comprises a breaking point. The second type of module is configured to guide the fluid around the battery cells of the system and/or is configured to be connected to a heat sink or to a device that pressurizes the fluid. The first type of module can also feature one or more sensors to detect the state of the module.

A fourth aspect of the present disclosure is related to a method for operating a battery cell system,
comprising the steps:
- obtaining an information that a bursting membrane of a battery cell ruptured;
- providing cooling fluid into the failed battery cell.

The battery cell system can in particular be a battery cell system according to the first aspect of this disclosure.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a battery cell system according to an embodiment of this disclosure.
Fig. 2 illustrates a battery cell system according to an embodiment of this disclosure.
Fig. 3 illustrates a battery cell system according to an embodiment of this disclosure.
Fig. 4 illustrates a method for operating a battery cell system according to an embodiment of this disclosure.

In the following description reference is made to the accompanying figures which form part of the disclosure and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

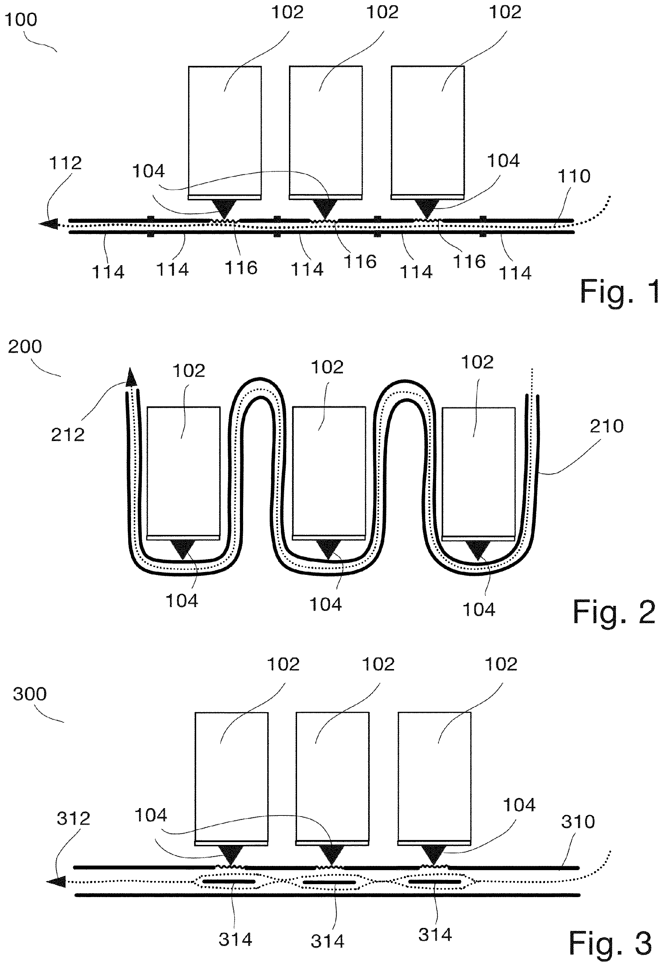

Fig. 1 illustrates a battery cell system 100 with a cooling plate according to an embodiment of this disclosure.

The battery cell system comprises three electrical battery cells 102. The battery cells are arranged on a cooling means 110 comprising a cooling plate on which the battery cells stand. The battery cells have a bursting membrane 104. The membrane is arranged in a base of the can of the battery cell. Alternatively, the bursting means can also be arranged in a lid. By such a lid standard battery cells can be equipped with an appropriate bursting means.

The cooling means 110 is designed as a strand profile (extruded profile) and has a coolant 112 flowing through it. The coolant 112 is fed through the extruded profile under high pressure. Furthermore, the cooling plates of the cooling means 110 are designed as plug-in modules 114. After a battery cell failure only a single cooling plate module 114 will be opened by the bursting membrane and then only the opened cooling plate module 114 needs to be replaced. The modules 114 are provided with predetermined breaking points 116 under each cell. If a membrane 104 of a battery cell 102 bursts, the strand profile 110 underneath is destroyed by the escaping pressure and coolant 112 is shot into the housing of the battery cell 102. The coolant 112 is dielectric and is mixed with a flame retardant.

This design a flame-retardant system for each battery cell. For better detectability, the coolant can be mixed with an intensive dye. In addition, the modules can be designed to be sealed so that the coolant cannot escape from the battery module in an uncontrolled manner. A valve can be provided such that the coolant 112 can be drained in a controlled manner when the module is being repaired.

Fig. 2 illustrates a battery cell system 200 according to an embodiment of this disclosure. The battery cell system has three battery cells 102, which can be similar to the battery cells of Fig. 1. The battery cells feature a burst membrane 104 each. The cooling means 210 comprises a cooling fluid 212 and is made of a flexible material, e.g., rubber. It is formed around the battery cell, such that an effective cooling can be provided in normal operation. For safety of the battery cell system, the cooling means is formed along the burst membranes 104 of each battery cell 102. In case a battery cell experiences a thermal runaway, the burst membrane will open the cooling means 210 such that cooling fluid 212 can be provided into the housing of the failed cell. As described in the context of Fig. 1, the cooling means can be comprised of modules such that - in case of a failure of a battery cell - only the module under a failed cell needs to be replaced.

Fig. 3 illustrates a battery cell system 300 according to an embodiment of this disclosure. The battery cell system has three battery cells 102, which can be similar to the battery cells of Fig. 1. The battery cells feature a burst membrane 104 each. The cooling means 310 comprises a cooling fluid 312 and is made of a stiff modular plate. The channel formed withing the cooling means further comprises a fluid separator 314 configured to lead some of the cooling fluid along a bursting membrane and to lead another part of the fluid such that it does not pass a bursting membrane. As a result, in the event of a burst membrane, not all of the liquid is supplied to the failed battery cell or is flushed into the battery cell system in an uncontrolled manner. Only a part of the cooling fluid is provided into the failed battery cell. With the remaining fluid a cooling function for the other battery cells can still be provided. The separator 314 can also be an entire parallel channel or parallel part of the channel.

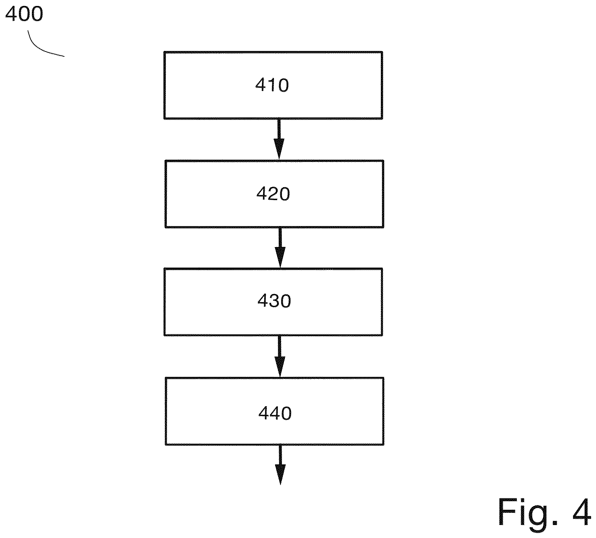

Fig. 4 illustrates a method 400 for operating a battery cell system according to an embodiment of this disclosure. In a first step 410 a bursting membrane is detected, e.g. by a sensor in the battery cell or in a cooling means. The information is send in a second step 420 to a battery management system. In a further step 430, the battery management system commands a pump in order to increase (or maintain) a pressure of fluid of a cooling system. Additionally, the battery management system can command, in step 440, to provide additional cooling fluid to the cooling means such that a cooling function of the non-failed batteries can be provided.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: battery cell system
- 102: battery cell
- 104: bursting membrane
- 110: colling means
- 112: cooling fluid
- 114: module of cooling means
- 116: breaking points
- 200: battery cell system
- 210: cooling means
- 212: cooling fluid
- 300: battery cell system
- 310: cooling means
- 312: cooling fluid
- 314: fluid separator
- 400: method for operating battery cell system
- 410: detecting battery failure
- 420: sending information
- 430: increase pressure
- 440: open fluid reservoir

## Claims

1. Battery cell system (100),
comprising:
- one or more battery cells (102) each comprising a housing, wherein the housing comprises a bursting membrane (104);
- a cooling means (110) formed along the one or more battery cells and comprising a cooling fluid (112);
wherein, if the bursting membrane of a battery cell bursts, it is configured to open the cooling means such that the cooling fluid enters the battery cell.

2. The battery cell system (100) according to the preceding claim,
wherein the bursting membrane (104) of a battery cell (102) is configured to penetrate the cooling means (110), if the bursting membrane bursts.

3. The battery cell system according to one of the preceding claims,
wherein the cooling means (110) comprises breaking points (116) arranged at the positions of the battery cells (102).

4. The battery cell system (100) according to one of the preceding claims, wherein the cooling means (110)is connected to each battery cell (102) by a valve such that in a non-closed state of the valve, the cooling means provides cooling fluid (112) to the respective battery; and
wherein each of the bursting membranes (104) of the battery cells is configured to open the valve, if the bursting membrane bursts.

5. The battery cells system according to one of the preceding claims, comprising a pump configured to pump fluid (112) into a battery cell (102) if its bursting membrane (104) breaks.

6. The battery cell system according to one of the preceding claims,
wherein the cooling fluid (112) comprises a flame retardant.

7. The battery cell system according to one of the preceding claims, wherein the fluid (112) is dielectric.

8. The battery cell system according to one of the preceding claims, comprising a fluid reservoir connected to the cooling means (110).

9. The battery cell system according to one of the preceding claims, comprising a fluid color configured to color the cooling fluid (112) in case a bursting membrane (104) ruptures.

10. The battery cell system according to one of the preceding claims, comprising a sensor configured to detect if a bursting membrane (104) broke and providing the information for an external receiver.

11. A battery cell (102) for arrangement in a battery cell system (100), comprising:
- a housing and an electrode stack;
- a bursting membrane (104); and
configured to be mounted on a cooling means (110) such that the bursting membrane, when it ruptures, causes a cooling fluid (112) from the cooling means to be provided into the battery housing.

12. A cooling means (110) for a battery cell system (100);
comprising:
- a channel for a cooling fluid (112); and
configured to
- be mounted to a battery cell (102); and
- provide the cooling fluid into a battery housing of the battery cell in case the battery cell causes to open the cooling means.

13. The cooling means (110) according to the preceding claim,
comprising a plurality of replaceable modules (114).

14. Method (400) for operating a battery cell system (100),
comprising the steps:
- obtaining an information that a bursting membrane (104) of a battery cell (102) ruptured;
- providing cooling fluid (112) into the failed battery cell.
